# EUROPEAN PATENT SPECIFICATION

(11) **EP 1 436 851 B1**
(45) Date of publication and mention of the grant of the patent: **20.04.2011**
(21) Application number: 02781198.3
(22) Date of filing: 01.10.2002
(51) Int. Cl.: H01M 4/62, C01B 31/04, C01B 31/00

(54) **ELECTROCHEMICAL CELL**
ELEKTROCHEMISCHE ZELLE
PILE ELECTROCHIMIQUE

(30) Priority: 08.10.2001 WO PCT/EP01/11583
(43) Date of publication of application: 14.07.2004
(73) Proprietor: TIMCAL AG, 6743 Bodio (CH)
(72) Inventor: SPAHR, Michael, E., CH-6512 Glubiasco (CH); WILHELM, Henri, CH-6500 Bellinzona (CH)
(74) Representative: Pohlman, Sandra M.
(86) International application number: PCT/EP2002/010990
(87) International publication number: WO 2003/032415

(56) References cited:
- EP-A- 0 087 489
- EP-A- 0 170 411
- EP-A- 1 098 379
- WO-A-99/34673
- US-B1- 6 287 694
- DATABASE WPI Section Ch, Week 200025 Derwent Publications Ltd., London, GB; Class E36, AN 2000-293066 XP002258507 & WO 00 18683 A1 (KOZLOV S I) 6 April 2000 (2000-04-06)

## Description

The present invention relates to an electrochemical cell, particular to such a cell having a positive electrode comprising electrolytic manganese dioxide (EMD), chemical manganese dioxide (CMD) or lithiated manganates cobaltates or nickelates. It relates especially to an alkaline zinc manganese dioxide battery, and more particularly to an improvement of the cathode ring comprising electrolytic manganese dioxide as the electroactive component and graphite as the conductive additive.

In known alkaline zinc manganese dioxide batteries regularly there is used as a positive electrode (cathode) a mixture of manganese dioxide in the form of small particles and a graphite material as a conductive additive. The graphite material improves the electroconductivity of the positive electrode as manganese dioxide particles have a comparatively low specific conductivity. It is therefore important that the ratio of manganese dioxide to graphite within a given volume of a battery is optimised. An increasing volume of graphite reduces the battery capacity and consequently the energy density of the battery, but reduces the internal resistance of the battery and vice versa a reduced volume of graphite increases the battery capacity and the energy density of the battery, but increases the internal resistance of the battery.

In order to increase the energy density and power density of the alkaline batteries it has been suggested to improve the quality of the electrolytic manganese dioxide as well as to increase the amount of the electrolytic manganese dioxide within the battery cathode. However, in order to gain more free space for the electroactive cathode material in the given cathode volume it is necessary to decrease the amount of graphite playing the role of an electrically conductive additive, which then leads to an increase of the internal resistance of the battery.

In EP 0 675 556 it has been suggested to replace conventional carbon particles by an expanded graphite with a specific particle size distribution within the range of 0.5-15µm (micron) as a conductive additive. Expanded graphite allows a greater amount of manganese dioxide to be used within a given volume, whereby a more optimized manganese dioxide to carbon ratio is obtained. Expanded graphite provides a better electrical conductivity than conventional synthetic or natural graphite for the same graphite contents, especially at graphite contents below 7% in the cathode mix. However, EP 0 675 556 does not mention any expansion rate for making the expanded graphite or that the expanded graphite would be present in a particular form, e.g. in a vermicular form.

A method for making expanded graphite from lamellar graphite is disclosed in WO 99/46437. This method comprises providing lamellar flake graphite particles, intercalating the lamellar flake graphite with an expandable intercalating compound, e.g. highly concentrated sulphuric acid or nitric acid, in an amount of at least 2% and preferably up to 3% by weight, expanding the treated graphite at elevated temperature, and finally air milling the expanded graphite. The initial expansion of the expanded graphite, i.e. before milling, is given as being greater than 125 times of its initial volume.

WO 99/34673 discloses an electrochemical cell with a cathode containing an expanded graphite as an electrically conductive material. Essentially the expanded graphite is made by treating lamellar flake graphite with an expandable intercalating compound, whereby the intercalating compound is used in an amount of at least 2% and preferably up to 3% by weight, expanding the treated graphite at elevated temperature, and finally milling and grinding the expanded graphite to break up the thermally expanded graphite particles in order to obtain expanded graphite crystals with a cupped or baseball-glove shaped configuration. This cupped or baseball-glove shaped configuration is a characterising feature of the invention described in WO 99/34673.

Expanded graphite is, as mentioned, a known material. For producing expanded graphite preferably natural purified graphite flakes are treated at elevated temperatures, optionally by vacuum impregnation, for example with mixtures of sulphuric acid (H₂SO₄) and hydrogen peroxide (H₂O₂) or sulphuric acid and an ammonium sulphate compound such as ammonium peroxodisulfate (NH₄S₂O₈), until these compounds become soaked between the graphite layers resp. become intercalated within the graphite sheets of the graphite crystal structure. After filtering and washing the intercalated graphite, the acid-treated graphite is heated at temperatures above the decomposition temperature of the intercalated compounds, which is generally at temperatures above 700°C, and preferably at about 1000°C, under inert gas atmosphere, to obtain the expanded or exfoliated graphite material. The expanded graphite product is then ground to receive its final particle size distribution.

Disadvantages of expanded graphite compared to conventional highly crystalline synthetic and natural graphite in the conductive mass are its difficult workability and processability, especially when it is mixed with the electroactive component of the cathode, its lower lubricating properties and its lower oxidation resistance. The lower lubricating properties lead to an increased tool wear during the cathode production process. The oxidation of expanded graphite with the manganese dioxide in the cathode leads to self discharge and a lower shelf life of batteries containing expanded graphite. To overcome these problems and to use the advantages of expanded graphite especially concerning electrical conductivity at the same time, it is a potential solution to use a mix of expanded graphite and conventional graphite as conductive additive.

Replacing a part of expanded graphite by non-expanded graphite implements a decrease of the electrical conductivity of the conductive additive. We have now found that this disadvantage in the mixture can be significantly reduced or eliminated if a particular morphology of expanded graphite, i.e. a thermally expanded graphite in its vermicular form, is used. The expressions "thermally expanded graphite in its vermicular form" or "vermicular expanded graphite" as used herein, refers to the expanded graphite form as obtain directly after thermal expansion in a vermicular form resp. morphology. In particular it means that the vermicular expanded graphite in its native form as obtained directly after thermal expansion is or has not being further treated by any mechanical force, e.g. shear force, which would destroy the native vermicular morphology. It means that the native exfoliated graphite in its vermicular form may be milled with shear forces which do not alter or destroy the vermicular morphology, for example with autogeneous milling methods, for example in order to reduce the Scott density. Thermally expanded graphite, as expanded sufficiently in its crystalline c-axis, resp. of its initial z-dimension, has a vermicular morphology, i.e. an accordion-like or worm-like structure. The expanded graphite in its vermicular form as used in the present invention may have different average grain sizes. If a graphite flake with a small grain size is being expanded the expanded graphite will have a small grain size, and if a graphite flake with a larger grain size is being expanded the expanded graphite will have a larger grain size. But both grain sizes will have good properties within the use according to the present invention. However, the preferred values as given herein are preferably used.

It should be mentioned that neither particle size nor the particle shape indicate the presence of graphite in a vermicular morphology. It is the texture of the expanded graphite which clearly identifies the vermicular morphology. The determination of the particle size distribution by laser diffraction in the case of highly anisotropic materials like expanded vermicular graphite leads to high deviations from the real particle sizes since the method is based on spherical-shaped particle. The enhanced performance of the vermicular expanded graphite to other forms of expanded graphite is only obtained when the expanded graphite reveals the texture which is typical for the vermicular morphology. The vermicular form of expanded graphite can be identified by the degree of expansion of the raw graphite material in the crystallographic c-direction which is perpendicular to the graphene layers. The thermal expansion results in a significant increase of the z-dimension of the graphite particle which is perpendicular to the graphite particle plane. Usually this expansion in the crystallographic c-direction giving the accordion-like morphology of the vermicular form causes a significant decrease of the bulk density measured in terms of Scott density as well as a significant increase of the specific BET surface area.

The critical features for the expanded graphite in its vermicular form within the present invention are (i) the initial expansion rate of the expanded graphite, and (ii) that the vermicular form of the expanded graphite is not being destroyed by an aftertreatment, e.g. by milling and/or grinding with a shear force that would destroy said vermicular morphology.

It was found that the initial particle expansion degree necessary to form the vermicular morphology should be at least 80 times of the z-dimension of the non-expanded graphite flake. Preferably the initial expansion degree of the expanded graphite flake in z-direction is within the range of 200 to 500 times of its initial z-dimension.

Expanded graphite in its vermicular form is known per se and has also been described for example in U.S.-Patent No. 3,323,869, U.S.-Patent No. 3,398,964, U.S.-Patent No. 3,404,061, and U.S.-Patent No. 3,494,382.

The present invention relates to an electrochemical as defined in claim 1.

Said electrochemical cell preferably is an alkaline zinc manganese dioxide battery having a positive electrode comprising electrolytic manganese dioxide and/or chemical manganese dioxide, preferably electrolytic manganese dioxide.

Preferably the initial particle expansion degree in the z-direction of said expanded graphite is greater than 300 times of the z-dimension of the initial non-exfoliated graphite flake, and preferably within the range of 300 to 500 times of its initial z-dimension, and preferably greater than 400 times of its initial z-dimension, and preferably within the range of 400 to 500 times of its initial z-dimension.

For graphite particle expansions in z-direction of 200 to 500 times of the z-dimension of the initial graphite flake, vermicular expanded graphite materials with Scott densities between 0.04 and 0.002 g/cm³ and specific BET surface areas between 25 and 55 m²/g are obtained. For graphite particle expansions in z-direction of 300 to 500 times of the z-dimension of the initial graphite flake, vermicular expanded graphite materials with Scott densities between 0.02 and 0.002 g/cm³ and specific BET surface areas between 35 and 55 m²/g are obtained. For graphite particle expansions between 200 and 400 times of the initial z-dimension, Scott densities between 0.04 and 0.005 g/cm³ as well as specific BET surface areas between 25 and 45 m2/g are observed. For graphite particle expansions of 80 times of the initial z-dimension, Scott densities of below 0.05 g/cm³ and BET values above 20 m²/g are obtained.

The conductive additive comprises the expanded graphite in its vermicular form either as a 100% conductive mass or as a binding additive in the graphite conductive mass. The expanded graphite is used as a graphite additive within the conductive mass, so that the graphite component comprises a graphite/vermicular expanded graphite mixture. The graphite is preferably a synthetic or natural flaky graphite powder with a high degree of anisometric particle shape as is known to be used as graphite binder component in alkaline zinc manganese dioxide batteries.

The present invention also refers to a composition comprising electrolytic manganese dioxide as electroactive component and graphite as a conductive additive as defined in claim 10. Preferably the expanded graphite within this composition has a Scott density as mentioned above.

The present invention further refers to method of making said composition.

The expanded graphite in its vermicular form has preferably a Scott density below 0.05 g/cm³, and preferably within the range of from 0.002 g/cm³ - 0.04 g/cm³, preferably within the range of from 0.005 g/cm³ - 0.04 g/cm³, preferably within the range of from 0.002 g/cm³ - 0.02 g/cm³. Preferably the expanded graphite in its vermicular form is constituted of coarse vermicular grains to also act efficiently as a reinforcement material.

The Scott density measurement is a standardized method (Reference: ASTM B 329) to characterize the apparent density of a powdered material. The Scott density is determined by passing the dried carbon powder through the Scott volumeter. The powder is collected in a 1 (inch)³ vessel corresponding to 16.39 cm³ and weighted to an accuracy of 0.1 mg. The ratio of weight to volume corresponds to the Scott density. To characterize small particles of graphite, the Scott density is the parameter which implicitly describes the particle size as well as the degree of anisotropy of the particles. A particle size distribution determined by laser diffraction as mentioned above cannot be taken as a method to characterise expanded graphite and therefore are not given here. To characterize expanded native graphite for its use in cathode materials, the more relevant material parameter is the Scott density as well as the specific BET surface area.

Vermicular graphite is an expanded graphite which has been expanded in the z-direction of the graphite particle at least about 80 times and preferably more than 200 times of its initial z-dimension. Further preferred values are given above.

The BET values of the vermicular expanded graphites used according to the present invention are preferably at least 20 m²/g or higher, preferably higher than 25 m²/g, preferably higher than 35 m²/g, preferably higher than 40 m²/g and preferably higher than 45 m²/g.

The Scott density of the vermicular expanded graphite used according to the present invention is 0.05 g/cm³, preferably lower than 0.04 g/cm³, preferably lower than 0.02 g/cm³, preferably lower than 0.005 g/cm³, especially between 0.002 g/cm³ and 0.04 g/cm³ and preferably between 0.005 and 0.04 g/cm³, and preferably within the range of from 0.002 g/cm³ - 0.02 g/cm³.

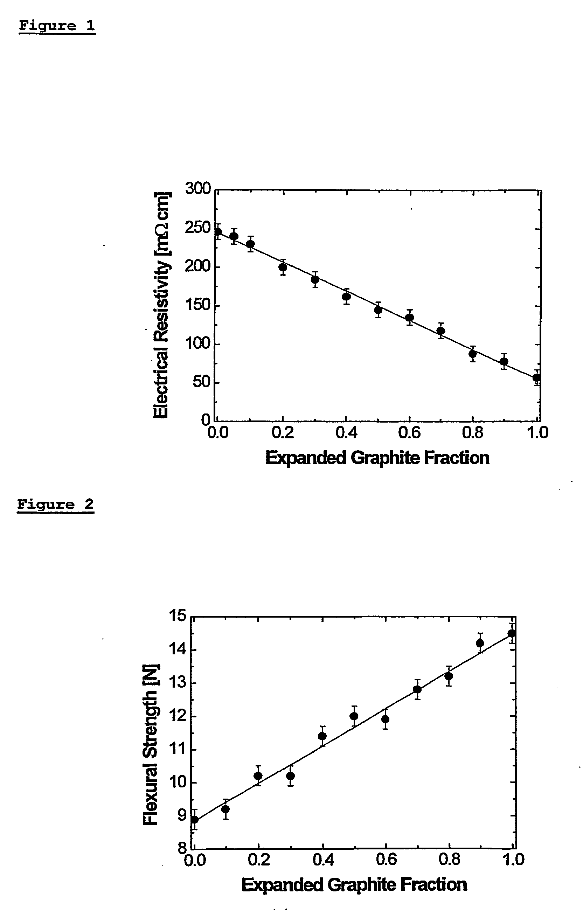

Conductivity measurements have shown, that if only a fraction of expanded (non vermicular) graphite is used in the conductive additive consisting mainly of conventional graphite, the specific resistance of a cathode ring decreases linearly with increasing amount of expanded graphite mixed in the graphite conductive additive as shown in Figure 1.

With regard to the mechanical stability of graphites and expanded (non vermicular) graphites, the flexural strength of a cathode ring was measured in Newton [N]. An almost linear relationship between the flexural strength of the manganese dioxide/graphite cathode mix and the fraction of expanded graphite, which was mixed to the graphite conductive additive was found as given in Figure 2.

We found that, in comparison to the values given in Figure 1 and Figure 2, a surprisingly low specific resistance and a surprisingly high mechanical stability can be obtained if expanded graphite in its vermicular form is used in place of conventional expanded and milled graphite. The vermicular form can be used either as a 100% conductive additive in the cathode or as an additive to the graphite conductive mass, i.e. in a conductive additive comprising a conventional synthetic or natural graphite together with an expanded graphite with vermicular morphology.

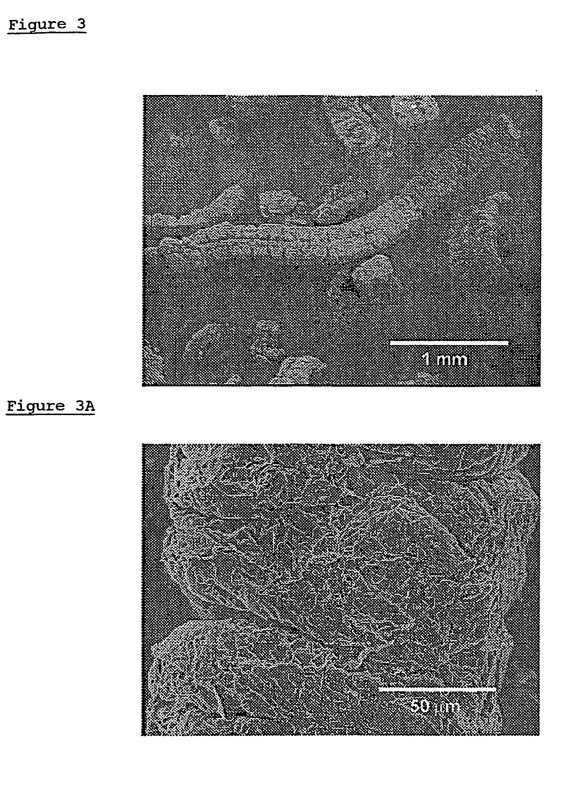

The surprising improvement of the mentioned properties is obtained if the vermicular morphology of the expanded graphite can be stabilized in the cathode ring. The vermicular form of expanded graphite is known per se. It is an extreme two-dimensional form of expanded graphite showing a typical accordion-like texture as indicated in the SEM pictures in Figure 3.

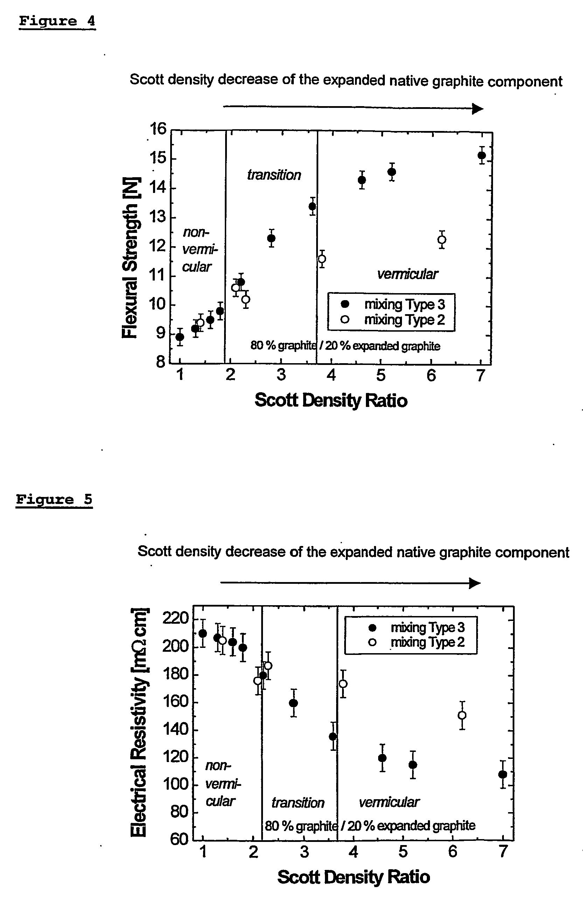

We have further found that the surprising change of the linear dependency of the specific resistance to lower values and change of the linear dependency of the mechanical stability to higher values occurs, when a vermicular form of the graphite is used having been expanded in the z-direction of the graphite particle at least about 80 times and preferably more than 200 times of its initial dimension, resp. having a Scott density value below 0.05 g/cm³. Figure 4 shows the non-linear increase of the flexural strength of the cathode ring when decreasing the Scott density of the expanded graphite in the graphite/expanded graphite conductive mix (increasing the Scott density ratio in Figure 4).

Figure 5 shows the non-linear decrease of the electrical resistivity of the cathode when decreasing the Scott density of the expanded graphite in the graphite/expanded graphite conductive mix (increasing the Scott density ratio in Figure 5). During the decrease of the Scott density the expanded graphite transforms to its vermicular morphology giving rise to these improvements of the cathode properties.

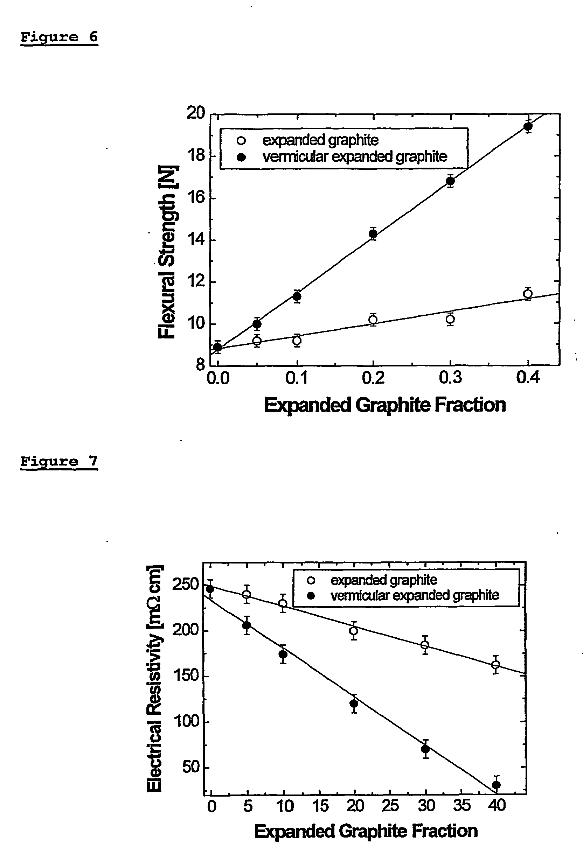

The flexural strength of the cathode ring increases more strongly when the conventional graphite in the cathode is continuously replaced (up to 100%) by a vermicular expanded graphite with a Scott density within the defined values (Figure 6). The electrical resistivity of the cathode ring decreases more strongly when the conventional graphite in the cathode is continuously replaced (up to 100%) by a vermicular expanded graphite with a Scott density within the defined values (Figure 7).

In the known production of expanded graphite the expanded graphite is regularly subjected to a milling process with high shear forces. The product obtained after said milling process has practically no vermicular morphology. We have found that if expanded graphite is treated mechanically in a grinding process, the vermicular morphology of the expanded graphite is maintained, provided that no high-shear forces and/or shock forces, resp. sufficiently low forces, are applied to the expanded native graphite.

The amount of vermicular expanded graphite added as part of the conductive graphite mass is within the range of 5-100% by weight and preferably within the range of 10-50% by weight. The most preferred range is 10-30% by weight, i.e. the conductive graphite mass consists of a conventional graphite and a vermicular expanded graphite, wherein the weight ratio of the conventional graphite to the vermicular expanded graphite is at most 5:100 preferably 90:10 to 50:50 and most preferably 90:10 to 70:30. This preferred ratio combines both the advantages of graphite and expanded graphite with its vermicular morphology in the battery cathode, especially in batteries with high energy density, were vermicular expanded graphite increases the mechanical stability and electrical conductivity of the cathode rings containing high electrolytic manganese dioxide to graphite ratios with graphite degrees below 7% by weight. Besides the performance advantages it also provides a cost-efficient system since only a comparatively small amount of vermicular expanded graphite is necessary to achieve this.

The amount of the conductive additive comprising at least an expanded graphite in its vermicular form, is preferably below 7% by weight, preferably within the range of 1-6% by weight, and preferably within the range of 2-5% by weight, calculated to the total weight of the cathode components, i.e. to the total weight of the electrolytic manganese dioxide as electroactive component and the graphite materials as a conductive additive component. Electrolytic manganese dioxide as electroactive component in alkaline zinc manganese dioxide batteries is known per se and is used in these known forms also in the present invention.

In comparison to the use of vermicular expanded graphite a significant effect on the flexural strength can be seen only at expanded (non vermicular) graphite fractions of more than 30% by weight mixed in the conventional graphite conductive additive. The beneficial effect of the vermicular expanded graphite on the flexural strength of the cathode ring can significantly be seen already in graphite conductive masses at vermicular expanded graphite contents below 30 % by weight.

Vermicular expanded graphite may be prepared by known methods, e.g. by treating natural or synthetic graphite flakes, coke or anthracite based carbons with average particle sizes between 10µm (micron) and 10mm with concentrated sulphuric acid at temperatures between room temperature and 200°C. Perchloric acid, hydrogen peroxide, ammonium peroxodisulfate or fuming nitric acid may be used as oxidizing agent. This treatment leads to the formation of the oxidized graphite salt with intercalated molecules (e.g. sulphate ions) between the graphene layers of the graphite crystal structure. Other intercalation agents may be used such as fuming nitric acid, nitrogen oxide or bromine. The graphite salt is filtered off and the intercalation liquid washed off thoroughly with water to remove traces of the intercalating agent and dried. The graphite salt is then subject to a thermal shock treatment at temperatures between 400°C and 1200°C to give an exfoliated graphite.

We optimized the intercalation and exfoliation conditions of the preparation process with regard to the electrochemical performance and mechanical stability of the cathode ring of the alkaline battery containing the vermicular expanded graphite. Optimized conditions were found by treating natural graphite flakes with average particle sizes between 100 microns and 1 mm with either fuming nitric acid (100%), nitrogen oxide gas (NOₓ) or sulphuric acid mixed with either fuming nitric acid (5-30%), hydrogen peroxide (30% aqueous solution, 5-40% by weight) or equivalent amounts of ammonium peroxodisulfate.

The amount of intercalating agent within the graphite flakes before expansion is preferably at least 5% by weight calculated to the graphite flakes, preferably at least 8%, and most preferably 10% by weight calculated to the graphite flakes. Most preferred is a content within the range of 10-20% by weight calculated to the graphite flakes.

The intercalation temperature of the intercalation process is room temperature, optionally using vacuum. The intercalation process can be accelerated using elevated temperatures between 50-120°C. After isolation of the intercalated graphite salt by filtration and subsequent washing and drying, a thermal shock treatment is applied at temperatures of at least 900°C, and preferably of about 1000°C, to exfoliate the graphite. Short process times for the exfoliation process of below one second during this thermal treatment led to ideal results especially with regard to the electrical conductivity of the electrolytic manganese dioxide/expanded vermicular graphite/graphite mixtures.

The present invention also refers to a method of making a thermally expanded graphite in its vermicular form according to claim 11. In this method the initial graphite particle expansion degree in z-direction of the particle is greater than 80 times of its initial z-dimension, and preferably within the range of 200 to 500 times of its initial z-dimension, optionally as a mixture with non-expanded graphite, useful for the production of positive electrodes for a cell having a positive electrode comprising electrolytic manganese dioxide (EMD), chemical manganese dioxide (CMD) or lithiated manganates cobaltates or nickelates, and especially for alkaline zinc manganese dioxide batteries. In this method (i) natural graphite flakes with average particle sizes between 100 microns and 1 mm are treated with an intercalating agent, whereby the amount of intercalating agent within the graphite flakes before expansion is preferably at least 5% by weight, preferably at least 8% by weight, more preferably 10% by weight, and most preferably within the range of 10-20% by weight calculated to the graphite flakes, (ii) isolating and subsequently washing and drying the intercalated graphite, (iii) applying a thermal shock treatment at temperatures of at least 900°C, and preferably at temperatures of about 1000°C, to exfoliate the graphite, wherein the process time for the exfoliation process is below one second. As a starting material natural graphite flakes of an average particle size within the range of about 150-250 micron are preferably used.

As an intercalating agent preferably either fuming nitric acid (100%), nitrogen oxide gas (NOₓ), or sulphuric acid mixed with either fuming nitric acid (5-30%), hydrogen peroxide (30% aqueous solution, 5-40% by weight) or equivalent amounts of ammonium peroxodisulfate, is used.

The thermally expanded graphite in its vermicular form thus obtained has in general a Scott density below 0.05 g/cm³, especially between 0.002 g/cm³ and 0.04 g/cm³ and preferably between 0.005 and 0.04 g/cm³, wherein a Scott density below 0.05 g/cm³ corresponds to a particle expansion degree of 80 times in z-dimension; a Scott density between 0.002 g/cm³ and 0.04 g/cm³ corresponds to a particle expansion degree of 500 to 200 times; a Scott density between 0.005 and 0.04 g/cm³ corresponds to a particle expansion degree of 400 to 200 times of the z-dimension.

After the thermal treatment, the raw exfoliated graphite material is preferably used in its native state. However it is allowable to mill the native exfoliated graphite in such a way that the applied shear forces and shock forces do not alter or destroy the vermicular morphology, the accordion-like or worm-like structure. Under such conditions the vermicular native graphite may be milled using preferably autogeneous milling methods to improve the handling of the cotton-like material. The autogeneous milling can be made in such a way to avoid high shear and shock forces, which are mainly applied when mechanical milling methods are used. Mechanical milling methods tend to destroy the vermicular morphology. The appropriate milling conditions of the exfoliated graphite therefore is important for avoiding to destroy the vermicular structure of the material. Autogeneous milling is preferably performed to obtain a Scott density below 0.05 g/cm³.

Also the type of mixing methods which are used to mix the expanded vermicular graphite in the graphite conductive mass are essential for the stabilization of the vermicular morphology. The vermicular form of expanded graphite can only be stabilized if an optimized milling and mixing process is applied. The problem of mixing expanded graphite with graphite or electrolytic manganese dioxide is the Scott density differences of the components which makes it difficult to reach homogeneous mixtures. To overcome this problem by known methods high energy is used to mix the components together in the manufacturing process of the cathode rings. These high mixing energies, especially when high shear forces are involved lead to the deterioration of the properties of expanded graphite especially in terms of mechanical stability of the cathode rings.

Figure 4 shows the flexural strength of cathodic masses containing conductive mixtures including 20% by weight of expanded graphite. These mixtures are obtained with two different mixing conditions. Method 1 mainly uses gravity (i.e. the mixing Type 3) to mix the graphite with the expanded graphite. Method 2 (i.e. the mixing Type 1 or 2) applies mainly shear forces. It can be seen clearly from the graph that the increase of the flexural strength after the transition of the expanded native graphite in the vermicular form can only be obtained by method 1. Method 2 seems to destroy the vermicular form of the expanded graphite so that the flexural strength of the cathode ring stays within the range which is obtained for the non-vermicular form of the expanded graphite even at low Scott densities of the graphite/expanded graphite mixture. Obviously high shear or shock forces tend to destroy the accordion-like structure of the vermicular expanded graphite during the mixing of the vermicular expanded graphite with the conventional graphite as well as with the electrolytic manganese dioxide during fabrication of the cathode material for the alkaline battery.

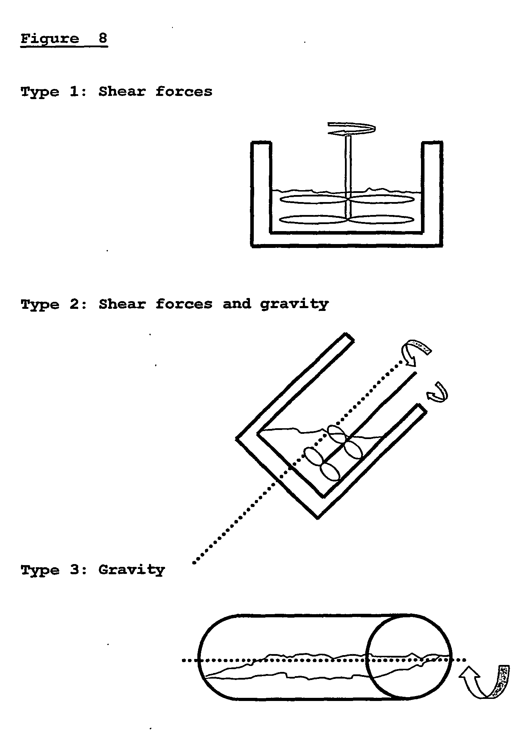

Figure 8 schematically shows three basic possibilities of mixing expanded graphite and graphite or expanded graphite, graphite and electrolytic manganese dioxide:
Type 1: Mixers using shear stress as a mixing principle (e.g. blade mixers, propeller mixers with single or multiple blade/propeller) ; given example is a single propeller mixer.
Type 2: Mixers combining both shear stress and gravity; given examples are inclined rotating drum mixer with double propeller system rotating in the reverse of the drum rotation.
Type 3: Mixers using rotational motion of the mixing chamber using gravity as a mixing principle; given example is a single axe rotational drum mixer. These mixer types also include more complicated motions of the cylindrical mixing chamber.

Mixers of Type 1 are not recommended. Due to the different apparent density of the powders, Type 1 mixers do not lead to homogeneous mixtures of vermicular expanded graphite and graphite. Conductive masses prepared by this mixing method gave usually not reproducible results in the cathode ring due to inhomogeneous mixtures. In addition the accordion-like texture of the vermicular expanded graphite was destroyed after the mixing process.

Better results are obtained with Type 2 mixers using combined shear forces and gravity to mix expanded graphite and graphite. An improved flexural strength value is obtained especially in this case if a graphite component with a low apparent density is used. The lower the apparent density of the graphite component the higher is its ability to be mixed with expanded graphite and the less damage on expanded graphite accordion-like texture was observed.

Best results are obtained with Type 3 mixers only using gravimetric forces to mix expanded graphite with another graphite. In this method where shear stress is completely absent, the damage of the vermicular expanded native graphite is minimized leading at the higher mechanical stability of the cathode rings. To efficiently mix vermicular expanded graphite and graphite, the mixing chambers of this system should not be filled more than 50% of its volume.

Figure 1 illustrates the linear decrease of the electrical resistivity of cathode masses (rings) with increasing amount of expanded graphite mixed in the graphite conductive additive. Specifically Figure 1 shows electrical resistivities of cathode masses containing an anisometric non-exfoliated graphite [d₅₀= 9 pm (micron), Scott density 0.063 g/cm³, BET surface area = 8 m²/g] mixed in different proportions with an expanded graphite (Scott density = 0.037 g/cm³, BET surface area of 25 m²/g). It is understood that expansion rate, the BET-values and the Scott densities as used herein correlate as follows:

| Expansion Rate | BET-values, m²/g | Scott-Densities, g/cm³ |
|---|---|---|
| 80 | 20 | 0.05 |
| 200 | 25 | 0.04 |
| 300 | 35 | 0.02 |
| 400 | 45 | 0.005 |
| 500 | 55 | 0.002 |

Figure 2 illustrates the almost linear relationship of the flexural strength of a cathode ring as a function of the manganese dioxide/graphite cathode mix and the fraction of expanded graphite, which was mixed to the graphite conductive additive. Specifically Figure 2 shows the flexural strength of cathode rings containing an anisometric non-exfoliated graphite [d₅₀= 9 pm (micron), Scott density 0.063 g/cm³, BET surface area = 8 m²/g] mixed in different proportions with an expanded graphite (Scott density = 0.037 g/cm³, BET surface area = 25 m²/g).

Figure 3 and Figure 3A show a scanning electron microscope pictures of the vermicular modification of expanded graphite.

Figure 4 shows the flexural strength of cathodic masses containing conductive mixtures including 20% by weight of expanded graphite. These mixtures are obtained with two different mixing conditions. Method 1 (i.e. Type 3) mainly uses gravity to mix the graphite with the expanded graphite yielding a mixture of graphite with expanded graphite according to the present invention. In the case of method 2 (i.e. Type 1 or 2) the increase of the flexural strength with decreasing Scott density of the expanded graphite (increasing Scott density ratio) is not as pronounced as with method 1. This indicates that the vermicular morphology of the expanded graphite is destroyed. Method 2 applies mainly shear forces yielding a mixture of graphite with expanded (non-vermicular) graphite. Specifically Figure 4 shows the flexural strength of cathode rings containing EMD and a conductive additive with the following composition: 80% of a non-exfoliated graphite [d₅₀= 9 µm (micron), Scott density 0.063 g/cm³, specific BET surface area = 8 m²/g] and 20% of different expanded graphites being distinguished in terms of Scott density. The X-axis corresponds to the ratio: Graphite Scott density/expanded graphite-Scott density. The graphite component in the mixtures is always the same, whereas different expanded graphites are used to prepare the conductive mixtures. Two mixing methods are used. In method 1 shear forces are avoided, method 2 mainly uses shear forces to mix the graphite and expanded graphite components.

Figure 5 illustrates the electrical resistivity of cathode masses containing EMD and a conductive additive with the following composition: 80% of an anisotropic non-exfoliated graphite (d₅₀= 9 µm (micron), Scott density 0.063 g/cm³, specific BET surface area = 8 m²/g) and 20% of different expanded graphites being distinguished in terms of Scott density. The X-axis corresponds to the ratio: Graphite Scott density/expanded graphite Scott density. The graphite component in the mixtures is always the same, whereas different expanded graphites are used to prepare the conductive mixtures. The Scott density of the expanded graphite decreases in direction of the x-axis. Two mixing methods are used. In method 1 shear forces are avoided, method 2 mainly uses shear forces to mix the graphite and expanded graphite components.

Figure 6 illustrates the flexural strength of cathode rings containing EMD and a conductive additive. The conductive additive consists of different ratios of either an expanded graphite (Scott density 0.037 g/cm³, specific BET surface area 25 m²/g) or a vermicular expanded graphite (Scott density 0.009 g/cm³, specific BET surface area 56 m²/g) and a conventional high crystalline graphite (d₅₀= 9 µm, Scott density 0.063 g/cm³, BET surface area = 8 m²/g)

Figure 7 illustrates the electrical resistivity of cathode masses containing EMD and a conductive additive. The conductive additive consists of different ratios of either an expanded graphite (Scott density 0.037 g/cm³, specific BET surface area 25 m²/g) or a vermicular expanded graphite (Scott density 0.009 g/cm³, specific BET surface area 56 m²/g) and a conventional high crystalline graphite (d₅₀= 9 µm, Scott density 0.063 g/cm³, BET surface area = 8 m²/g).

Figure 8 schematically shows three basic possibilities of mixing expanded graphite and graphite or expanded graphite, graphite and electrolytic manganese dioxide. Specifically Figure 8 shows schematic drawings of 3 basic mixing principles applied in mixing methods. To avoid the degradation of the vermicular form of the expanded graphite during the mixing process with graphite and electrolytic manganese dioxide, Type 2 or Type 3 should be applied.

### Experimental Part

### Measurement of Flexural strength

A mixture of 94% electrolytic manganese dioxide (EMD) (TOSOH MK97, stored in an atmosphere with a constant humidity of 65% r.h.) and 6% of the graphite component was mixed in a TURBULA mixer. 3 rings with an outer diameter of 24.3 mm, an inner diameter of 16.0 mm and a length of 1 cm were pressed per graphite sample with a pressure of 3 t/cm². These rings were broken in an ERICHSEN PA010 and the flexural strength of the rings was measured in Newton [N]. The measurement of the other analogous compositions was made in the same manner.

### Measurement of electrical resistivity

A mixture of 94% EMD (TOSOH MK97, stored in an atmosphere with a constant humidity of 65%) and 6% of the graphite component was mixed in a TURBULA mixer. Rectangular-formed samples (10 cm x 1cm x 1cm) were pressed with 3 t/cm². Electrical resistivity was measured with a 4-points measurement in mΩ cm.

### Preparation of the mixtures of expanded graphite with graphite and electrolytic manganese dioxide (EMD)

The different types of expanded graphite are mixed to various synthetic and natural graphites by mixing Type 3 (if not otherwise stated) to retain the structure and particle texture of the expanded graphite. The mixtures of expanded graphite and graphite are then mixed with EMD to form the cathode material, which is compacted into alkaline battery rings.

### Graphite

Synthetic graphites were manufactured by graphitizing carbon precursors at graphitization conditions and subsequent grinding to the appropriate particle size distribution. The resulting synthetic graphites showed ash contents below 0.1%, a high degree of crystallinity (c/2=0.3354-0.3356 nm, Lc=50-1000 nm, Xylene densities = 2.25-2.27 g/cm³). The particle size distribution of the considered materials had d₅₀ values between 3 and 50 microns (MALVERN), the specific BET surface areas between 1 and 20 m²/g.

Natural graphites were manufactured by purifying natural graphite ore by flotation and a subsequent thermal or chemical purification leading to ash contents below 0.1 %. The raw graphites were ground to obtain the appropriate particle size distributions. The material properties are the same as for the synthetic graphites.

### Electrolytic manganese dioxide (EMD)

The EMD used throughout the investigations showed an average particle size distribution of 30-40 micron and a bulk density of 4.5 g/cm³.

## Claims

1. An electrochemical cell having a positive electrode comprising electrolytic manganese dioxide, chemical manganese dioxide, lithiated manganates, cobaltates or nickelates as an electroactive component and graphite as a conductive additive, **characterized in that** said conductive additive comprises a mixture of a conventional graphite and a thermally expanded graphite in its vermicular form, wherein the expanded graphite has an accordion- or worm-like structure and is in vermicular form and has not been further treated by a process that would destroy the native vermicular morphology and the initial graphite particle expansion degree of said expanded graphite in the z-direction of the particle is greater than 80 times of the initial z-dimension of the particle, and preferably within the range of 200 to 500 times of its initial z-dimension, wherein the amount of said vermicular expanded graphite is at least 5 % (w/w) of the total conductive graphite mass and at most present in a weight ratio of 5:100 of conventional graphite to vermicular expanded graphite.

2. The electrochemical cell according to claim 1, **characterized in that** said cell is an alkaline zinc manganese dioxide battery having a positive electrode comprising electrolytic manganese dioxide and/or chemical manganese dioxide, preferably electrolytic manganese dioxide.

3. The electrochemical cell according to claims 1 or 2, wherein the starting graphite particles have been expanded in the z-direction more than 300 times of their initial dimension, and preferably within the range of 300 to 500 times of their initial z-dimension, and preferably greater than 400 times of their initial z-dimension, and preferably within the range of 400 to 500 times of their initial z-dimension.

4. The electrochemical cell according to any one of claims 1-3, **characterized in that** said expanded graphite in its vermicular form reveals a Scott density below 0.05 g/cm³, preferably lower than 0.04 g/cm³, preferably lower than 0.02 g/cm³, preferably lower than 0.005 g/cm³, preferably within the range of from 0.002 g/cm³- 0.04 g/cm³, preferably within the range of from 0.005 g/cm³- 0.04 g/cm³ and preferably within the range of from 0.002 g/cm³- 0.02g/cm³.

5. The electrochemical cell according to any one of claims 1-4, **characterized in that** said vermicular expanded graphite used is a graphite additive within the conductive mass and that the graphite is a synthetic or natural flaky graphite powder with a high degree of anisometric particle shape.

6. The electrochemical cell according to any one of claims 1-5, **characterized in that** the BET value of the expanded vermicular graphite is at least 20 m²/g or higher, preferably higher than 25 m²/g, preferably higher than 40 m²/g, and preferably higher than 45 m²/g.

7. The electrochemical cell according to any one of claims 1-6, **characterized in that** the amount of vermicular expanded graphite added as the conductive graphite mass or as part of the conductive graphite mass is within the range of 5% - 100%, preferably within the range of 10% - 50%, and preferably within the range is 10% - 30% by weight.

8. The electrochemical cell according to any one of claims 1-7, **characterized in that** the amount of the conductive additive comprising at least an expanded graphite in its vermicular form, is preferably below 7% by weight, preferably within the range of 1 - 6% by weight, and preferably within the range of 2 - 5% by weight, calculated to the total weight of the electrolytic manganese dioxide as the electroactive component and the graphite as the conductive additive component.

9. The electrochemical cell according to any one of claims 1-8, **characterized in that** the native exfoliated graphite has been milled with shear forces which do not alter or destroy the vermicular morphology, preferably with autogeneous milling methods, to a Scott density below 0.05 g/cm³.

10. A composition for the use in the electrochemical cell according to any one of claims 1-9, comprising electrolytic manganese dioxide as an electroactive component and graphite as a conductive additive, **characterized in that** said conductive additive comprises a mixture of conventional graphite and a thermally expanded graphite in its vermicular form, wherein the expanded graphite has an accordion- or worm-like structure and is in vermicular form and has not been further treated by a process that would destroy the native vermicular morphology and the initial graphite particle expansion degree of said expanded graphite in the z-direction of the particle is greater than 80 times of the initial z-dimension of the particle, and preferably within the range of 200 to 500 times of its initial z-dimension, and wherein the amount of said vermicular expanded graphite is at least 5 % (w/w) of the total conductive graphite mass and at most present in a weight ratio of 5:100 of conventional graphite to vermicular expanded graphite.

11. A method of making a thermally expanded graphite in its vermicular form, in the form of a mixture with conventional, non-expanded graphite, for the production of the electrochemical cell according to any one of claims 1-9, **characterized in that** (i) natural graphite flakes with average particle sizes between 100 microns and 1 mm are treated with an intercalating agent, whereby the amount of intercalating agent within the graphite flakes before expansion is preferably at least 5% by weight, preferably at least 8% by weight, more preferably 10% by weight, and most preferably within the range of 10-20% by weight calculated to the graphite flakes, (ii) isolating and subsequently washing and drying the intercalated graphite, (iii) applying a thermal shock treatment at temperatures of at least 900°C, and preferably at temperatures of about 1000°C, to exfoliate the graphite, wherein the process time for the exfoliation process is below one second; and (iv) mixing the vermicular expanded graphite obtained by step (iii) with a conventional graphite,
wherein the amount of said vermicular expanded graphite is at least 5 % (w/w) of the total conductive graphite mass and at most present in a weight ratio of 5:100 of conventional graphite to vermicular expanded graphite.

12. The method according to claim 11, **characterized in that** said intercalating agent is either fuming nitric acid (100%), nitrogen oxide gas (NOₓ), or sulphuric acid mixed with either fuming nitric acid (5-30%), hydrogen peroxide (30% aqueous solution, 5-40% by weight) or equivalent amounts of ammonium peroxodisulfate.

13. The method according to claims 11 or 12, **characterized in that** the thermally expanded native graphite in its vermicular form obtained has a Scott density below 0.05 g/cm³, especially between 0.002 g/cm³ and 0.04 g/cm³ and preferably between 0.005 and 0.04 g/cm³.

14. The method according to any one of the claims 11-13, **characterized in that** the expanded graphite in its vermicular form is milled with a autogeneous milling method until a Scott density value below 0.05 g/cm³ is obtained.

## Patentansprüche

1. Elektrochemische Zelle, die eine positive Elektrode aufweist, die elektrolytisches Mangandioxid, chemisches Mangandioxid, lithiierte Manganate, Cobaltate oder Nickelate als eine elektroaktive Komponente und Graphit als einen leitenden Zusatzstoff umfasst, **dadurch gekennzeichnet, dass** der leitende Zusatzstoff ein Gemisch aus einem herkömmlichen Graphit und aus einem thermisch expandierten Graphit in seiner vermicularen Form umfasst, wobei der expandierte Graphit eine ziehharmonika- oder wurmartige Struktur aufweist und in seiner vermicularen Form ist und nicht durch einen Prozess, der die native vermiculare Morphologie zerstören würde, weiterbehandelt worden ist, und wobei der Anfangs-Graphitpartikel-Expansionsgrad des expandierten Graphits in der z-Richtung des Partikels mehr als das 80-fache der Anfangs-z-Dimension des Partikels beträgt und vorzugsweise innerhalb des Bereichs des 200- bis 500-fachen seiner Anfangs-z-Dimension liegt, wobei die Menge des expandierten Vermiculargraphits wenigstens 5 (Gew.-)% der Gesamtmasse des leitenden Graphits beträgt und höchstens in einem Gewichtsverhältnis von 5:100 von herkömmlichem Graphit zu expandiertem Vermiculargraphit vorhanden ist.

2. Elektrochemische Zelle nach Anspruch 1, **dadurch gekennzeichnet, dass** die Zelle eine Alkali-Zink-Mangandioxid-Batterie ist, die eine positive Elektrode aufweist, die elektrolytisches Mangandioxid und/oder chemisches Mangandioxid, vorzugsweise elektrolytisches Mangandioxid, umfasst.

3. Elektrochemische Zelle nach Anspruch 1 oder 2, bei der die Anfangsgraphitpartikel in der z-Richtung mehr als das 300-fache ihrer Anfangsdimension und vorzugsweise innerhalb des Bereichs des 300- bis 500-fachen ihrer Anfangs-z-Dimension und vorzugsweise mehr als das 400-fache ihrer Anfangs-z-Dimension und vorzugsweise innerhalb des Bereichs des 400- bis 500-fachen ihrer Anfangs-z-Dimension expandiert worden sind.

4. Elektrochemische Zelle nach einem der Ansprüche 1-3, **dadurch gekennzeichnet, dass** der expandierte Graphit in seiner Vermicularform eine Scott-Dichte unter 0,05 g/cm³, vorzugsweise von weniger als 0,04 g/cm³, vorzugsweise von weniger als 0,02 g/cm³, vorzugsweise von weniger als 0,005 g/cm³, vorzugsweise innerhalb des Bereichs von 0,002 g/cm³ - 0,04 g/cm³, vorzugsweise innerhalb des Bereichs von 0,005 g/cm³ - 0,04 g/cm³ und vorzugsweise innerhalb des Bereichs von 0,002 g/cm³ - 0,02 g/cm³ offenbart.

5. Elektrochemische Zelle nach einem der Ansprüche 1-4, **dadurch gekennzeichnet, dass** der verwendete expandierte Vermiculargraphit ein Graphitzusatz innerhalb der leitenden Masse ist und dass der Graphit ein synthetisches oder natürliches Flockengraphit-Pulver mit einem hohen Grad einer anisometrischen Partikelform ist.

6. Elektrochemische Zelle nach einem der Ansprüche 1-5, **dadurch gekennzeichnet, dass** der BET-Wert des expandierten Vermiculargraphits wenigstens 20 m²/g oder höher, vorzugsweise höher als 25 m²/g, vorzugsweise höher als 40 m²/g und vorzugsweise höher als 45 m²/g ist.

7. Elektrochemische Zelle nach einem der Ansprüche 1-6, **dadurch gekennzeichnet, dass** die Menge des als die leitende Graphitmasse oder als Teil der leitenden Graphitmasse zugegebenen expandierten Vermiculargraphits innerhalb des Bereichs von 5 Gew.-% - 100 Gew.-%, vorzugsweise innerhalb des Bereichs von 10 Gew.-% - 50 Gew.-% und vorzugsweise innerhalb des Bereichs von 10 Gew.-% - 30 Gew.-% liegt.

8. Elektrochemische Zelle nach einem der Ansprüche 1-7, **dadurch gekennzeichnet, dass** die Menge des leitenden Zusatzstoffs, der wenigstens einen expandierten Graphit in seiner Vermicularform umfasst, vorzugsweise unter 7 Gew.-%, vorzugsweise innerhalb des Bereichs von 1 - 6 Gew.-% und vorzugsweise innerhalb des Bereichs von 2 - 5 Gew.-% beträgt, berechnet auf das Gesamtgewicht des elektrolytischen Mangandioxids,der elektroaktiven Komponente, und des Graphits, der leitenden Zusatzkomponente.

9. Elektrochemische Zelle nach einem der Ansprüche 1-8, **dadurch gekennzeichnet, dass** der native, abgeblätterte Graphit mit Scherkräften, die die vermiculare Morphologie nicht ändern oder zerstören, vorzugsweise mit autogenen Mahlverfahren, auf eine Scott-Dichte unter 0,05 g/cm³ gemahlen worden ist.

10. Zusammensetzung für die Verwendung in der elektrochemischen Zelle nach einem der Ansprüche 1-9, die elektrolytisches Mangandioxid als eine elektroaktive Komponente und Graphit als einen leitenden Zusatzstoff umfasst, **dadurch gekennzeichnet, dass** der leitende Zusatzstoff ein Gemisch aus herkömmlichem Graphit und aus einem thermisch expandierten Graphit in seiner vermicularen Form umfasst, wobei der expandierte Graphit eine ziehharmonika- oder wurmartige Struktur aufweist und in seiner vermicularen Form ist und nicht durch einen Prozess, der die native vermiculare Morphologie zerstören würde, weiterbehandelt worden ist, und wobei der Anfangs-Graphitpartikel-Expansionsgrad des expandierten Graphits in der z-Richtung des Partikels mehr als das 80-fache der Anfangs-z-Dimension des Partikels beträgt und vorzugsweise innerhalb des Bereichs des 200- bis 500- fachen seiner Anfangs-z-Dimension liegt, und wobei die Menge des expandierten Vermiculargraphits wenigstens 5 (Gew.-)% der Gesamtmasse des leitenden Graphits beträgt und höchstens in einem Gewichtsverhältnis von 5:100 von herkömmlichem Graphit zu expandiertem Vermiculargraphit vorhanden ist.

11. Verfahren zur Herstellung eines thermisch expandierten Graphits in seiner vermicularen Form in Form eines Gemischs mit herkömmlichem, nicht expandiertem Graphit für die Produktion der elektrochemische Zelle nach einem der Ansprüche 1-9, **dadurch gekennzeichnet, dass** (i) natürliche Graphitflocken mit durchschnittlichen Partikelgrößen zwischen 100 Mikrometern und 1 mm mit einem Interkalierungsmittel behandelt werden, wobei die Menge des Interkalierungsmittels innerhalb der Graphitflocken vor der Expansion vorzugsweise wenigstens 5 Gew.-%, vorzugsweise wenigstens 8 Gew.-%, bevorzugter 10 Gew.-% und am meistem bevorzugt innerhalb des Bereichs von 10-20 Gew.-%, berechnet auf die Graphitflocken, beträgt, (ii) Abtrennen und nachfolgendes Waschen und Trocknen des interkalierten Graphits, (iii) Anwenden einer Wärmschockbehandlung mit Temperaturen von wenigstens 900°C und vorzugsweise mit Temperaturen von etwa 1000°C zum Abblättern des Graphits, wobei die Prozesszeit für den Abblätterungsprozess unter einer Sekunde beträgt; und (iv) Mischen des durch Schritt (iii) erhaltenen expandierten Vermiculargraphits mit einem herkömmlichen Graphit,
wobei die Menge des expandierten Vermiculargraphits wenigstens 5 (Gew.-)% der Gesamtmasse des leitenden Graphits beträgt und höchstens in einem Gewichtsverhältnis von 5:100 von herkömmlichem Graphit zu expandiertem Vermiculargraphit vorhanden ist.

12. Verfahren nach Anspruch 11, **dadurch gekennzeichnet, dass** das Interkalierungsmittel rauchende Salpetersäure (100 %), Stickoxidgas (NOₓ) oder Schwefelsäure, gemischt mit rauchender Salpetersäure (5-30 %), Wasserstoffperoxid (30 % wässrige Lösung, 5-40 Gew.-%) oder äquivalenten Mengen Ammoniumperoxodisulfat, ist.

13. Verfahren nach Ansprüchen 11 oder 12, **dadurch gekennzeichnet, dass** der erhaltene thermisch expandierte native Graphit in seiner vermicularen Form eine Scott-Dichte unter 0,05 g/cm³, insbesondere zwischen 0,002 g/cm³ und 0,04 g/cm³ und vorzugsweise zwischen 0,005 und 0,04 g/cm³, besitzt.

14. Verfahren nach einem der Ansprüche 11-13, **dadurch gekennzeichnet, dass** der expandierte Graphit in seiner vermicularen Form mit einem autogenen Mahlverfahren gemahlen wird, bis ein Scott-Dichtewert unter 0,05 g/cm³ erhalten wird.

## Revendications

1. Cellule électrochimique présentant une électrode positive comprenant du dioxyde de manganèse électrolytique, du dioxyde de manganèse chimique, des manganates, cobaltates ou nickelates lithiés comme composant électroactif et du graphite comme additif conducteur, **caractérisée en ce que** ledit additif conducteur comprend un mélange de graphite conventionnel et de graphite thermiquement expansé dans sa forme vermiculaire, étant donné que le graphite expansé présente une structure de type accordéon ou de type ver et est sous forme vermiculaire et n'a pas été soumis à un traitement ultérieur par un processus qui détruirait la morphologie vermiculaire native, et le degré d'expansion de particule de graphite initial dudit graphite expansé dans le sens z de la particule est supérieur à 80 fois la dimension z initiale de la particule, et de préférence dans la plage de 200 à 500 fois sa dimension z initiale, la quantité dudit graphite expansé vermiculaire étant au moins 5 % (w/w) de la masse totale de graphite conducteur et au plus présent en un rapport de poids de 5:100 de graphite conventionnel par rapport au graphite expansé vermiculaire.

2. Cellule électrochimique selon la revendication 1, **caractérisée en ce que** ladite cellule est une batterie au zinc / dioxyde de manganèse alcaline présentant une électrode positive comprenant du dioxyde de manganèse électrolytique et/ou du dioxyde de manganèse chimique, de préférence du dioxyde de manganèse électrolytique.

3. Cellule électrochimique selon la revendication 1 ou 2, dans laquelle les particules de graphite de départ ont été expansées dans le sens z de plus de 300 fois leur dimension initiale, et de préférence dans la plage de 300 à 500 fois leur dimension z initiale, et de préférence plus de 400 fois leur dimension z initiale, et de préférence dans la plage de 400 à 500 fois leur dimension z initiale.

4. Cellule électrochimique selon l'une quelconque des revendications 1-3, **caractérisée en ce que** ledit graphite expansé dans sa forme vermiculaire révèle une densité de Scott inférieure à 0,05 g/cm³, de préférence inférieure à 0,04 g/cm³, de préférence inférieure à 0,02 g/cm³, de préférence inférieure à 0,005 g/cm³, de préférence dans la plage de 0,002 g/cm³ à 0,04 g/cm³, de préférence dans la plage de 0,005 g/cm³ à 0,04 g/cm³, et de préférence dans la plage de 0,002 g/cm³ à 0,02 g/cm³.

5. Cellule électrochimique selon l'une quelconque des revendications 1-4, **caractérisée en ce que** ledit graphite expansé vermiculaire utilisé est un additif de graphite au sein de la masse conductrice et **en ce que** le graphite est un poudre de graphite en écailles synthétique ou naturel avec un haut degré de forme de particule anisométrique.

6. Cellule électrochimique selon l'une quelconque des revendications 1-5, **caractérisée en ce que** la valeur BET du graphite vermiculaire expansé est supérieure ou égale à 20 m²/g, de préférence supérieure à 25 m²/g, de préférence supérieure à 40 m²/g, et de préférence supérieure à 45 m²/g.

7. Cellule électrochimique selon l'une quelconque des revendications 1-6, **caractérisée en ce que** la quantité de graphite expansé vermiculaire ajouté comme masse de graphite conducteur ou comme partie de la masse de graphite conducteur est située dans la plage de 5% à 100%, de préférence dans la plage de 10% à 50%, et de préférence dans la plage de 10% à 30% en poids.

8. Cellule électrochimique selon l'une quelconque des revendications 1-7, **caractérisée en ce que** la quantité d'additif conducteur comprenant au moins un graphite expansé dans sa forme vermiculaire est de préférence inférieure à 7% en poids, de préférence dans la plage de 1 à 6% en poids, et de préférence dans la plage de 2 à 5% en poids, calculée par rapport au poids total de dioxyde de manganèse électrolytique comme composant électro-actif et du graphite comme composant additif conducteur.

9. Cellule électrochimique selon l'une quelconque des revendications 1-8, **caractérisée en ce que** le graphite exfolié natif a été broyé avec des efforts de cisaillement qui ne modifient ou ne détruisent pas la morphologie vermiculaire, de préférence au moyen de méthodes de broyage autogènes, à une densité de Scott inférieure à 0,05 g/cm³.

10. Composition pour utilisation dans une cellule électrochimique selon l'une quelconque des revendications 1-9, comprenant du dioxyde de manganèse électrolytique comme composant électroactif et du graphite comme additif conducteur, **caractérisée en ce que** ledit additif conducteur comprend un mélange de graphite conventionnel et de graphite thermiquement expansé dans sa forme vermiculaire, étant donné que le graphite expansé présente une structure de type accordéon ou de type ver et est sous forme vermiculaire et n'a pas été soumis à un traitement ultérieur par un processus qui détruirait la morphologie vermiculaire native, et le degré d'expansion de particule de graphite initial dudit graphite expansé dans le sens z de la particule est supérieur à 80 fois la dimension z initiale de la particule, et de préférence dans la plage de 200 à 500 fois sa dimension z initiale, la quantité dudit graphite expansé vermiculaire étant également au moins 5 % (w/w) de la masse totale de graphite conducteur et au plus présent en un rapport de poids de 5:100 de graphite conventionnel par rapport au graphite expansé vermiculaire.

11. Méthode de fabrication d'un graphite thermiquement expansé dans sa forme vermiculaire, sous forme d'un mélange avec du graphite non expansé, pour la production d'une cellule électrochimique selon l'une quelconque des revendications 1-9, **caractérisée en ce que** (i) des écailles de graphite naturel avec des tailles de particules moyennes entre 100 microns et 1 mm sont traitées avec un agent intercalaire, étant donné que la quantité d'agent intercalaire au sein des écailles de graphite avant l'expansion est de préférence au moins 5% en poids, de préférence au moins 8% en poids, plus préférablement 10% en poids, et encore plus préférablement dans la plage de 10-20% en poids par rapport aux écailles de graphite, (ii) le graphite intercalaire est isolé, puis lavé et séché, (iii) un traitement de choc thermique est appliqué à des températures d'au moins 900°C, et de préférence à des températures d'environ 1000°C, pour exfolier le graphite, étant donné que le temps de traitement pour le processus d'exfoliation est inférieur à une seconde ; et (iv) le graphite expansé vermiculaire obtenu à l'étape (iii) est mélangé avec un graphite conventionnel,
la quantité dudit graphite expansé vermiculaire étant au moins 5 % en poids de la masse totale de graphite conducteur et au plus présente en un rapport de poids de 5:100 de graphite conventionnel par rapport au graphite expansé vermiculaire.

12. Méthode selon la revendication 11, **caractérisée en ce que** ledit agent intercalaire est soit de l'acide nitrique fumant (100%), soit de l'oxyde d'azote gazeux (NOₓ), soit de l'acide sulfurique mélangé à de l'acide nitrique fumant (5-30%), du péroxyde d'hydrogène (solution aqueuse à 30%, 5-40% en poids) ou des quantités équivalentes de péroxodisulfate d'ammonium.

13. Méthode selon la revendication 11 ou 12, **caractérisée en ce que** le graphite natif thermiquement expansé dans sa forme vermiculaire obtenu a une densité de Scott inférieure à 0,05 g/cm³, spécialement entre 0,002 g/cm³ et 0,04 g/cm³, et de préférence entre 0,005 et 0,04 g/cm³.

14. Méthode selon l'une quelconque des revendications 11-13, **caractérisée en ce que** le graphite expansé dans sa forme vermiculaire est broyé avec une méthode de broyage autogène jusqu'à obtention d'une densité de Scott inférieure à 0,05 g/cm³.
